# EUROPEAN PATENT APPLICATION

(11) **EP 1 977 863 A1**
(43) Date of publication of application: **08.10.2008**
(21) Application number: 07006842.4
(22) Date of filing: 02.04.2007
(51) Int. Cl.: B25B 27/10, F16L 37/091

(54) **Method for assembling and disassembling a pipe fitting arrangement with a tool and such a tool**

(71) Applicant: IBP Conex Limited, Tipton West Midlands DY4 7JU (GB)
(72) Inventor: Webb, Steven, Paul, Tipton West Midlands, DY4 7LX (GB); Salehi-Bakhtiari, Manouchehr, Cordoba (ES)
(74) Representative: Weber-Bruls, Dorothée

(57) **Abstract**

The present invention refers to a method for inserting a pipe into a socket for obtaining a pipe fitting arrangement in which the pipe is retainable arranged within the socket by teeth of a grip ring placed within the socket and for removing the pipe out of the socket by making usage of a tool, characterized by the following steps for pipe insertion:
a) inserting the tool at least partly into the socket mouth into which the pipe is to be inserted,
b) extending the internal diameter of the socket mouth at least over a part of its circumference being smaller than the external pipe diameter when inserting the tool, and/or extending the internal diameter of the grip ring at least over a part of its circumference being smaller than the external pipe diameter when inserting the tool, with at least one internal first tooth, preferably two opposing teeth, of the grip ring substantially preventing the insertion of the pipe without the use of the tool,
c) inserting the pipe into the socket mouth through a tool opening,
d) withdrawing the tool out of the socket, and
e) disengaging the tool from the pipe;
as well as a tool for assembling or disassembling a pipe fitting arrangement with such a method.

## Description

The present invention refers to a method for inserting a pipe into a socket for obtaining a pipe fitting arrangement in which the pipe is retainable arranged within the socket by teeth of a grip ring placed within the socket and for removing the pipe out of the socket by making usage of a tool; and a tool for assembling and disassembling a pipe fitting arrangement with such a method.

A pipe fitting arrangement is known in particular from WO 2005/114031 A2 and will be discussed in further detail with respect to the enclosed figure 1a. Accordingly, a pipe fitting arrangement comprises a housing 100 into which a pipe, not shown, is to be inserted. The housing 100 is provided with a first shoulder 102, having a chamfer 103, a projection 104 defining a second and third shoulder, both being provided with a chamfer 105a, 105b, and a fourth shoulder 106 next to a rolled-over end 108. Between the first shoulder 102 and the projection 104 a sealing ring 110 and between the projection 104 and the rolled-over end 108 a grip ring 112 with internal teeth 114 is provided. Thus, the projection 104 fulfills a plurality of functions, namely by providing a spacer between the sealing ring 110 and the gripping ring 112, limiting the movement of the sealing ring 110 in the pipe removal direction, limiting a deformation of the grip ring 112 in the pipe insertion direction and supporting the pipe. The diameter of the opening 109, defined by the rolled-over end 108 and into which the pipe is to be inserted, is larger than the diameter of the projection 104 such that said end 108 will not engage the pipe, whereas the teeth 114 are configured to engage the pipe.

As soon as the pipe is inserted into the housing 100 through the opening 109 a seal between the pipe and the housing 100 is obtained by a compression of the sealing ring 110, whereas retention of the pipe within the housing 100 is provided by the engagement of the teeth 114 upon the pipe.

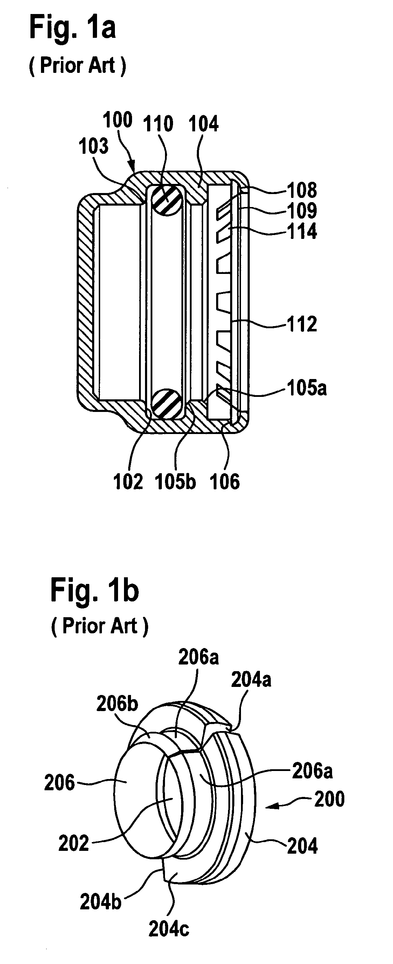

WO 2005/114031 A2 also describes a release tool 200 shown in figure 1b enclosed herewith. Such a release tool 200 is necessary to release the pipe from the pipe fitting arrangement shown in figure 1 a by urging the teeth 114 of the grip ring 112 out of engagement with the pipe. For this purpose the release tool 200 is provided with an opening 202 for the pipe and a main body 204 with a projection 206 adapted to be inserted into the housing 100, said insertion being limited by the projection 104 of the housing 100. The main body 204 is provided with a V-shaped split 204a as well as a material thinning or recess 204b for facilitating an attachment around the pipe and a front face 204c for engagement with the housing 100, in particular the rolled-over end 108 thereof. The projection 206 comprises a cylindrical portion 206a and chamfered portion 206b facilitating the insertion between the pipe and the housing 100.

In order to engage the release tool 200 of figure 1b with the pipe fitting arrangement of figure 1a, the tool is aligned relative to the pipe such that the longitudinal axis thereof is running parallel to the longitudinal axis of the pipe. Then the release tool 200 can be opened in the region of the split 204a and thereafter pushed against the pipe with the opened split 204a facing the pipe, whereas the region next to the recess 204b serves as a hinge for facilitating such an opening. As soon as the pipe has been completely entered into the opening 202 the split 204a will close again due to spring forces provided by the main body 204. In a next step the release tool 200 can be slided on the pipe in the direction of the housing 100 with the projection 206 leading and, thus, when passing the teeth 114, forcing them radially outward. Finally, the pipe can be drawn out off the housing 100 as it is no longer retained therein by the teeth 114. As soon as the pipe has been completely removed out of the housing 100, the release tool 200 can also be removed therefrom.

An alternative release tool for disengaging teeth from a pipe in order to remove the pipe from a coupling is known from EP 1 521 027 B1. Said release tool comprises a first member in form of a pusher to be inserted into the coupling to urge the teeth radially outward and, thus, releasing the engagement thereof with the pipe, and a second member in form of a cap to be screwed onto the coupling for engaging the first member. In particular, the cap can be screwed onto the coupling as well as the pusher and thereby moving the pusher in the pipe insertion direction, whereas an unscrewing of the cap leads to a movement of the pusher in the pipe removal direction.

These release tools are difficult to handle by a user.

Further, it is a major problem of the known pipe fitting arrangements that they might have leak paths due to scratches or the like on the pipe surface as a result of the teeth of the grip ring urging against the pipe when inserting the same into the housing. This problem has been addressed for screw connections in DE 20 2005 001 100 U1. In fact it is proposed by DE 20 2005 001 100 U1 to make usage of a grip ring the internally extending teeth thereof defining with their free ends an inner diameter larger than the outer diameter of the tube in the relaxed state of the grip ring. As soon as all parts are screwed together the grip ring is forced to lie between a pressure ring and a swivel nut with its diameter being reduced such that the teeth thereof are engaging the pipe. This leads to a very complicated structure as it requires in addition to the housing said pressure ring and swivel nut.

EP 07 002 188.6, not pre-published, refers to an insertion and release tool for a pipe fitting arrangement and addresses the problem of avoiding scratches on a pipe when assembling as well as disassembling the pipe fitting arrangement. In fact, the tool described in EP 07 002 188.6 allows a user to locate a socket, fitting or housing within the tool, whereupon by mechanical means the diameter of a grip ring within said housing can be opened such that a pipe without being damaged can be inserted into the housing and removed therefrom. The work of the user is further facilitated not only by the easy handling of the tool, but also by reducing the affords required by the user to manually push the pipe into the housing and thus complete the joint in order to obtain a fluid tight, even gas tight, pipe fitting arrangement. But such a pipe fitting arrangement can still be assembled without the help of such a tool which might lead to damaging the pipe surface and, thus, destroying gas tightness.

It is, therefore, the object of the present invention to further develop the known method to overcome the problems of the prior art. That is, it has to be ensured by the method of the present invention that the tool is used in order to avoid any damaging of the pipe and, thus, to ensure a fluid or gas tight connection between the pipe and the socket, fitting or housing of the pipe fitting arrangement.

This object is achieved according to the invention by the following steps for pipe insertion:
a) inserting the tool at least partly into the socket mouth into which the pipe is to be inserted,
b) extending the internal diameter of the socket mouth at least over a part of its circumference being smaller than the external pipe diameter when inserting the tool,
c) inserting the pipe into the socket mouth through a tool opening,
d) withdrawing the tool out of the socket, and
e) disengaging the tool from the pipe.

With the invention it is preferred that the free end of the socket at the socket mouth is, in particular elastically, forced outward and/or deformed, in particular bent, at least partly when inserting the tool into the socket.

It is also preferred that the free end of the socket, in particular comprising at least one extension extending into the socket mouth opening, preferably two opposing extensions, is folded into the socket, in particular until engaging the grip ring.

The object of the invention is also achieved by following steps for pipe insertion:
a) inserting the tool at least partly into the socket mouth into which the pipe is to be inserted,
b) extending the internal diameter of the grip ring at least over a part of its circumference being smaller than the external pipe diameter when inserting the tool, with at least one internal first tooth, preferably two opposing teeth, of the grip ring substantially preventing the insertion of the pipe without the use of the tool,
c) inserting the pipe into the socket mouth through a tool opening,
d) withdrawing the tool out of the socket, and
e) disengaging the tool from the pipe.

With the invention it is preferred that the first tooth is, in particular elastically, forced outwardly and/or deformed, preferably bent, at least partly when inserting the tool into the socket, with the first tooth most preferably extending radially inwardly prior to being bent.

It is also preferred that the first tooth is folded into the socket, in particular until engaging the socket internal surface, preferably provided by an internal projection, most preferably a chamfer of said projection.

The invention in addition proposes that second internal teeth of the grip ring are, in particular elastically, forced outwardly and/or deformed, in particular bent at least partly, when inserting the tool into the socket, preferably until engaging the projection, most preferably its chamfer.

Still further it is proposed that the grip ring is formed from a flat, in particular metal, plate by cutting, pressing or stamping out or wire eroding the first and second teeth, with the first tooth being cut, pressed, stamped or wire eroded longer than the second teeth and/or the second teeth being bent after cutting, pressing, stamping or wire eroding such that the internal free end of the first tooth is internally projecting the internal free ends of the second teeth.

It is preferred according to the invention that the free end, the first tooth and/or the second teeth, preferably at least the second teeth, are at least partly relaxed when the tool is withdrawn out of the socket, most preferably until engaging the outer surface of the pipe in step d).

With the invention it is also proposed that a first engagement means of the tool is inserted into the socket while a second engagement means of the tool supports the socket, preferably by engaging the socket outer surface, most preferably abutting against an outer step, shoulder, projection or bent of the socket.

The following steps for pipe withdrawal are proposed by the invention:
f) placing the first engagement means in engagement with the pipe and the second engagement means in engagement with the socket,
g) inserting at least a part of the first engagement means into the socket mouth thereby disengaging the free end and/or the first tooth and the second teeth from the pipe by forcing them outwardly until the pipe can be withdrawn,
h) withdrawing the pipe out of the socket and the tool and
i) disengaging the first engagement means from the socket.

Still further embodiments of the invention can be characterized in that in step a), b), f) and/or g) the distance between the first engagement means and the second engagement means is reduced, in particular by closing the tool, and/or in step d) and/or i) the distance between the first engagement means and the second engagement means is enlarged, in particular by opening the tool.

It is preferred according to the invention that a third engagement means of the tool is formed in connection with the second engagement means via a handle and for at least temporarily engaging the first engagement means.

A Tool for assembling or disassembling a pipe fitting arrangement with a method according to the invention is also provided, said tool comprising: first engagement means for engaging at least partly around the pipe, said first engagement means having at least one part adapted to enter the socket around the pipe in order to force at least a part of the free end of the socket and/or at least a part of the first internal tooth and at least a part of the second internal teeth outwardly to enable an insertion and withdrawal of the pipe, second engagement means for engaging the socket as well as third engagement means for engaging the first engagement means in order to locate the socket relative to the tool, in particular within the tool, and a handle connected with the second and third engagement means and suited to be actuated, in particular via actuation means, to urge the second engagement means either to engage the socket or disengage the socket and the first engagement means either to be inserted into the socket or to be withdrawn from the socket such that insertion of the pipe into the socket and removal of the pipe from the socket without the free end and/or the first tooth and the second teeth touching the pipe is ensured.

Embodiments of the tool of the invention are characterized in that the first engagement means is connected to and/or at least partly displaceable relative to the third engagement means, preferably via a first joint, in particular in form of a pivot, and/or first spring means.

It is preferred according to the invention that the first engagement means comprises a main body, in particular in form of a ring, having at least one face or shoulder adapted to engage the mouth of the socket into which the pipe is to be inserted and from which the pipe is to be removed, and a first opening for the pipe, said first opening preferably being defined by the face or shoulder and/or being variable and/or adjustable, most preferably via the actuation means and/or second spring means, in particular the second spring means and the first spring means being formed together.

The invention in addition proposes that the main body is deformable, preferably being formed at least partly from elastic or spring material, and/or can be opened, preferably by comprising at least one split, most preferably two opposing splits, and/or by providing a plurality of fingers or claws between recesses.

It is also proposed with the invention that the main body comprises at least one, in particular angled, extension next to one split, preferably two such extensions one on each side of the split, to facilitate entering of the pipe into the first engagement means through the split.

Further embodiments of the invention can be characterized in that the main body is formed by two halves being connected to each other, preferably at a second joint, in particular in form of a pivot, arranged next to a split, most preferably the split opposite the extension(s), in particular the second joint being identical to the first joint.

Still further embodiments of the invention can be characterized in that the part of the first engagement means to be inserted into the socket has a tube like form, preferably having at least one split, most preferably two opposing splits, and/or is provided with a chamfer or tapering off towards its free end for facilitating its insertion into the socket.

According to the invention it is proposed that the outer surface of the first engagement means, in particular of the part, is provided with at least one abutment shoulder, projection or bent for engaging the socket mouth and/or the first tooth, preferably defining a deformation of at least a part of the free end, in particular in the region of an extension, and/or the first tooth.

The invention also proposes that the shoulder, projection or bent is provided on the chamfer, preferably next to a step.

It is also preferred that the part of the first engagement means is formed as a projection of the main body surrounding the first opening at least partly.

With the invention it is in addition preferred that the second engagement means comprises first holding means for engagement with the socket and the third engagement means comprises second holding means for engagement with the first engagement means, the socket being preferably locatable between the two holding means and/or the holding means being preferably moveable relative to each other, most preferably via the actuation means.

Further it is proposed that the first holding means comprises a substantially U-shaped first body, preferably in form of a first jaw, and/or the second holding means comprises a substantially U-shaped second body, preferably in form of a second jaw.

Still further it is proposed that the first holding means has a second opening for the socket and/or the second holding means has a third opening for the pipe, the second and/or third opening being preferably variable and/or adjustable, in particular via the actuation means and/or third spring means for facilitating the insertion of the pipe and/or socket, the third spring means most preferably being formed together with the first and/or second spring means.

Embodiments of the invention can be characterized in that the second opening is provided between two halves of the first holding means being pivotably connected to each other, pref erably via a third pivot, most preferably being identical to the first joint, and/or the third opening is provided between two halves of the second holding means being pivotably connected to each other, preferably via a fourth joint, most preferably being identical with the third joint.

Embodiments of the invention can also be characterized in that the first, second and/or third spring means comprise(s) at least one elastic ring, in particular a rubber O-ring, arranged substantially perpendicular to a longitudinal axis of the first, second and/or third opening, preferably the first spring means being arranged within at least one recess of the main body and/the second holding means.

The invention also proposes that the first holding means is adapted to engage the socket outer surface between a first internal projection or shoulder or bent of the socket for limiting insertion of the pipe into the socket and a second internal projection or shoulder or bent of the socket for limiting movement of a sealing ring in the pipe insertion direction or between said second internal projection or shoulder or bent and a third internal projection or shoulder or bent of the socket for limiting movement of the grip ring in the pipe insertion direction and/or limiting movement of the sealing ring in the pipe removal direction.

A tool according to the invention can be further characterized in that the third internal shoulder is provided by the internal projection limiting movement of the first internal tooth and the second internal teeth when inserting the tool part into the socket.

The invention also proposes that the internal projection has a shoulder facing the grip ring, preferably provided with a chamfer, said chamfer most preferably running substantially parallel to the chamfer of the tool part when inserted.

Special embodiments of the invention are characterized in that the first holding means is adapted to engage the socket outer surface next to at least one external shoulder or projection and/or within a recess or groove.

It is also preferred according to the invention that the handle and the actuation means are formed as a plier's and/or ratchet's handle and actuation means.

With the invention it is proposed that the handle, preferably in U-shape, is connected to the first and the second holding means, most preferably with one holding means provided at each free end.

Furthermore it is proposed that the free ends of the handle are moveable towards each other and away from each other via the actuating means, preferably by moving a slider bar, in particular within a slot provided in each arm of the U-shaped handle, to the free ends and away therefrom.

Finally it is also preferred according to the invention that the slider bar is positioned substantially parallel to the longitudinal axis of the first, second and/or third opening and/or fixable in at least two positions.

It is the astonishing perception of the invention that a pipe insertion into a socket housing a grip ring without employing a tool of the invention can be made impossible. This is achieved by providing the socket mouth and/or the grip ring with an internal diameter being smaller than the outer pipe diameter such that the pipe insertion requires the tool extending or expanding said internal diameter(s).

The invention will now be further described, by way of example, with reference to the accompanying drawings, in which:
- figure 1a: is a longitudinal cross-sectional view of a housing of a known pipe fitting arrangement;
- figure 1b: is a perspective view of a known release tool;
- figure 2a: is a longitudinal cross-sectional view of a first socket of a pipe fitting arrangement, prior to insertion of a pipe;
- figure 2b: is a longitudinal cross-sectional view of a second socket of a pipe fitting arrangement, prior to insertion of a pipe;
- figure 3: is a perspective view of a third socket of a pipe fitting arrangement, prior to the insertion of a pipe;
- figure 4a: is a part perspective view of a first tool of the invention;
- figure 4b: is a different perspective view of the first tool part of figure 4a, holding a socket;
- figure 5a to 5d: are part perspective views, with parts cut away, demonstrating a method of the invention with the first tool shown in figures 4a and 4b and the socket shown in figure 3;
- figure 6: is a top view of a grip ring;
- figure 7: is a perspective view of a second tool of the invention; and
- figures 8a to 8c: are part perspective views, with parts cut away, demonstrating a method of the invention making usage of the second tool of figure 7 and the grip ring of figure 6.

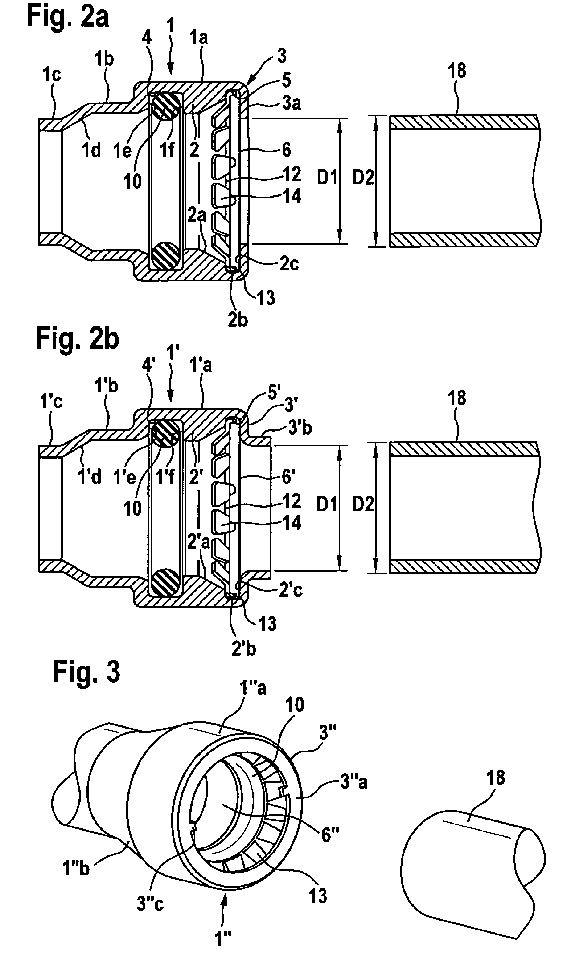

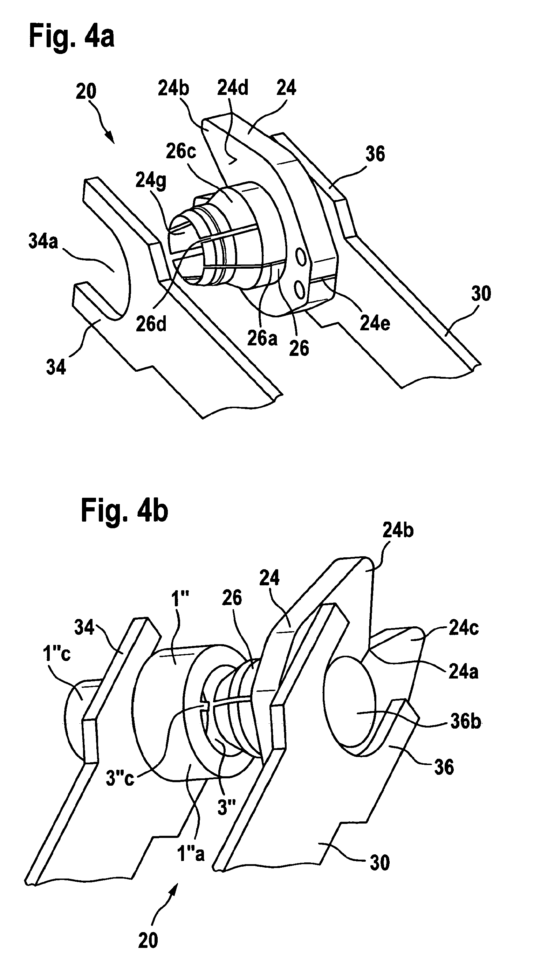

A method of the invention can be employed for assembling a socket 1 with a pipe 18 shown in figure 2a. Such a socket 1 is provided with an outer step-like surface, namely having three steps 1a, 1b, 1c. Between the steps 1c and 1b a bent 1d is provided, which serves as a limit stop for the pipe 18 when being inserted into the socket 1. Between the steps 1b and 1a a shoulder 1e is provided which limits the movement of a sealing ring 10 in the pipe insertion direction. The sealing ring 10 is arranged within a groove 4 defined not only by the shoulder 1e but also by a shoulder 1f provided by a projection 2 and limiting the movement of the sealing ring 10 in the pipe withdrawal direction. The projection 2 in addition limits the movement of a grip ring 12 in the pipe insertion direction, said grip ring 12, being arranged within a further groove 5, has external teeth 13 as well as internal teeth 14. The internal teeth 14 are elastically deformable, that is can be forced outwardly until engaging the projection 2, in particular its shoulder 2a, whereas the groove 5 is provided by a further shoulder 2b of the projection 2 and a shoulder 2c of a socket mouth 3. The external teeth 13 of the grip ring 12 engage the socket 1, in particular in the region of the groove 5. The socket mouth 3 is provided by a folded end 3a of the socket 1 and defines a socket mouth opening 6 having a diameter D1 being less than the outer diameter D2 of the pipe 18. Thus, the pipe 18 cannot be inserted into the socket 1 without deforming, in particular expanding, the folded end 3a with a tool, for example the tool described below with reference to figures 4a to 5d.

Other socket geometries can be used with a method of the invention, as long as its socket mouth opening diameter D1 is smaller than the outer pipe diameter D2. Such a further geometry of a socket 1' is shown in figure 2b. The socket parts shown in figure 2b corresponding to those shown in figure 2a have the same reference signs, but are marked with an apostrophe. The only difference between the sockets 1 and 1' is the form of the respective mouth 3, 3'. The mouth 3' of the socket 1' is provided with a double folded end 3'b defining the opening 6' having a diameter D 1 still being smaller than the outer diameter D2 of the pipe 18 such that the pipe 18 cannot be inserted into the socket 1' without a tool of the invention.

Figure 3 shows a further socket geometry, with all socket parts corresponding to those of the sockets 1 and 1', respectively, have the same reference signs, but now marked by two apostrophes. Again, it is solely the form of the mouth 3" of the socket 1" which differs from the socket structure described with reference to figures 2a and 2b. The mouth 3" is provided with a folded end 3"a having two extensions 3"c. In particular between the two extensions 3"c opposing each other the internal diameter of the opening 6" is smaller than the outer diameter of the pipe 18 such that the pipe 18 cannot be inserted into the socket 1" without the help of a tool of the invention.

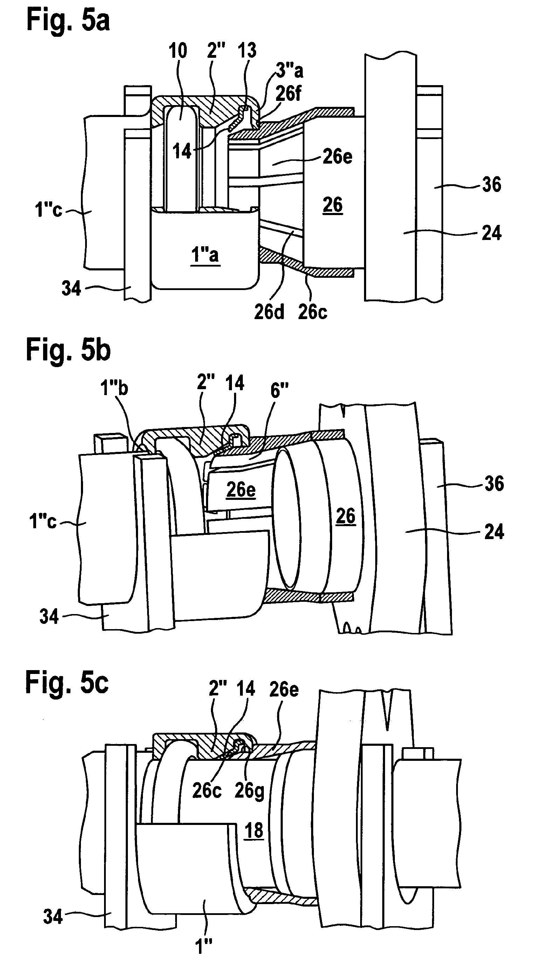

Such a tool 20 of the invention is now described with reference to figures 4a and 4b. The tool 20 comprises a first engagement means in the form of a ring 24 with a projection 26 insertable into a socket, like the socket 1" of figure 3 as will be described with reference to figures 5a to 5d below. The ring 24 is formed out of two halves joined in the region of two opposing splits 24a, 24e, without any details of said joint being shown in figures 4a and 4b in order to enhance readability of those figures. In addition, the ring 24 is provided with two angled extensions 24b and 24c on both sides of the split 24a through which a pipe (not shown) can easily be inserted by opening the two halves of the ring 24. The ring 24 is also provided with a front face 24d for engaging a socket mouth 3" as will be described with reference to figures 5a to 5d below, when a pipe extends through an opening 24g. In analogy to the ring 24 the projection 26 is also provided with two opposing splits only one of which can be seen in figures 4a and 4b, namely the split 26a. The outer surface of the projection 26 is provided with a chamfer 26c in order to facilitate the insertion into the socket 1". In order to be elastically deformable the projection 26 is also provided with a plurality of recesses 26d between fingers 26e.

The first engagement means 24, 26 is connected with second and third engagement means 34, 36. The second engagement means comprises a U-shaped jaw 34 with an opening 34a for the socket 1". In fact, the jaw 34 can grip the outer circumference of the socket 1" in the region of the step 1"b as best shown in figure 5b. The third engagement means is also provided by a U-shaped jaw 36 with an opening 36b for a pipe (not shown). The two halves of the first engagement means 24, 26 can be rotated relative to the third engagement 36 in order to allow the insertion of the pipe. In addition, the first engagement means 24, 26 together with the third engagement means 36 can be moved towards the second engagement means 34 by actuating a pliers like handle 30 in order to insert the projection 26 into the socket 1" and, thereby, locating the socket 1" within the tool 20, the tool 20 then being in its closed position shown in figure 5b.

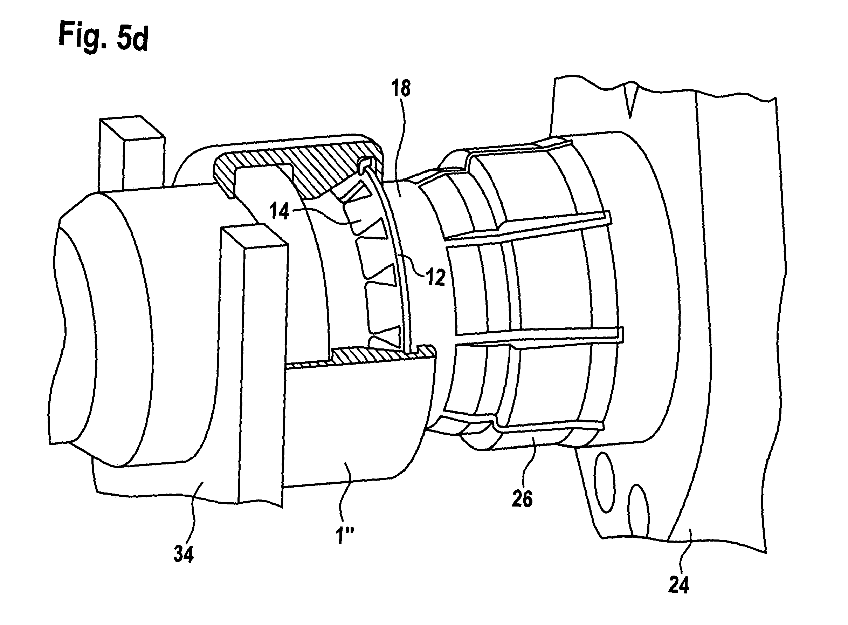

The closing of the tool 20 and, thus, the approaching of the two jaws 34, 36 is shown in figures 5a and 5b, with a part section of the socket 1", the grip ring 13 and the projection 26 being removed for illustrative purposes. While moving the jaws 34 and 36 towards each other the projection 26 enters the socket 1" until the extension 3"c (not shown in figures 5a and 5b) is folded into the socket 1", and the folded end 3"a engages a shoulder 26f provided on the projection 26, see figure 5a. The folded end 3"a is, thus, arranged in the region of a step 26g such that a further movement of the projection 26 into the socket 1" will not only force the internal teeth 14 of the grip ring 12 outwardly until abutting against the projection 2", but also further expanding the socket mouth 3" to enhance the opening 6", see figure 5b. Next, the tube 18 can be entered through the openings 36b, 34a and 24g into the socket 1" until abutting against a limit stop in form of a bent (not shown), see figure 5c. During the insertion of the tube 18 into the socket 1" neither the folded end 3"a, with its extensions 3"c, nor the internal teeth 14 touch the outer circumference of the pipe 18 and, therefore, any damaging thereof is avoided. In order to finalize the pipe fitting arrangement the projection 26 has to be withdrawn out of the socket 1" by opening the tool 20, see figure 5d. When the projection 26 passes the grip ring 12 the internal teeth 14 will relax into a position in which they engage the outer circumference of the pipe 16. Finally, the assembled pipe fitting arrangement can be disengaged from the tool 20, not shown.

To summarize, the socket mouth diameter being less than the pipe outer diameter ensures that until the prescribed tool 20 is employed a joint between the socket 1" and the pipe 18 cannot be made.

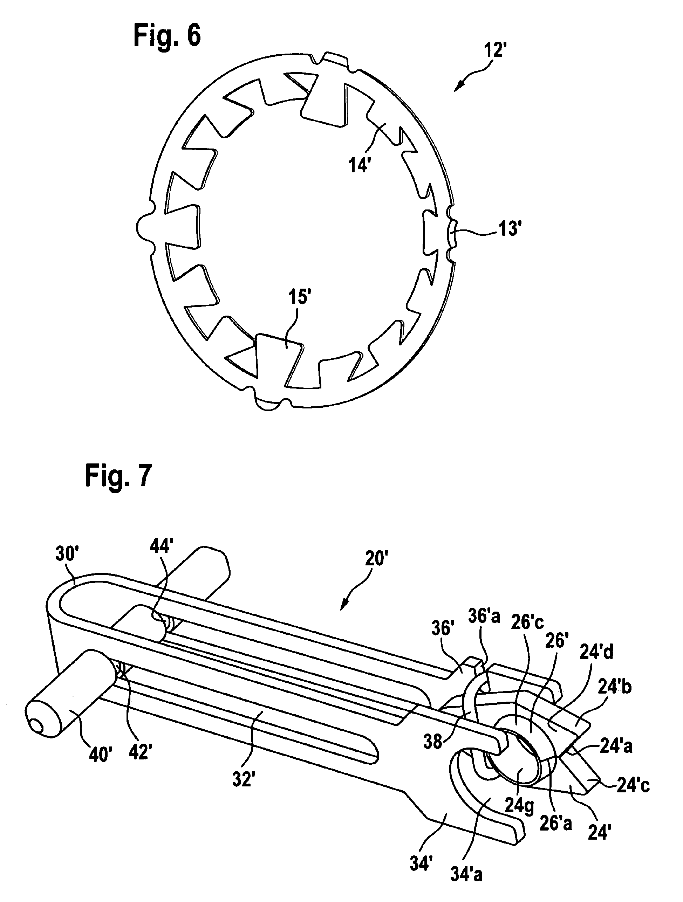

In an alternative method of the invention for ensuring pipe insertion solely with a tool of the invention a grip ring 12' as shown in figure 6 can be used. Such a grip ring 12' has, in addition to external teeth 13' and internal teeth 14', two further internal teeth 15' not folded in the direction of pipe insertion to assist pipe insertion, those teeth 15' opposing each other. This creates a condition when, in order to insert the pipe, a considerable increase in force is required, even to such a degree that a manual insertion of the pipe is not possible, rather the employment of a tool 20', for example as shown in figure 7, is needed to assist insertion.

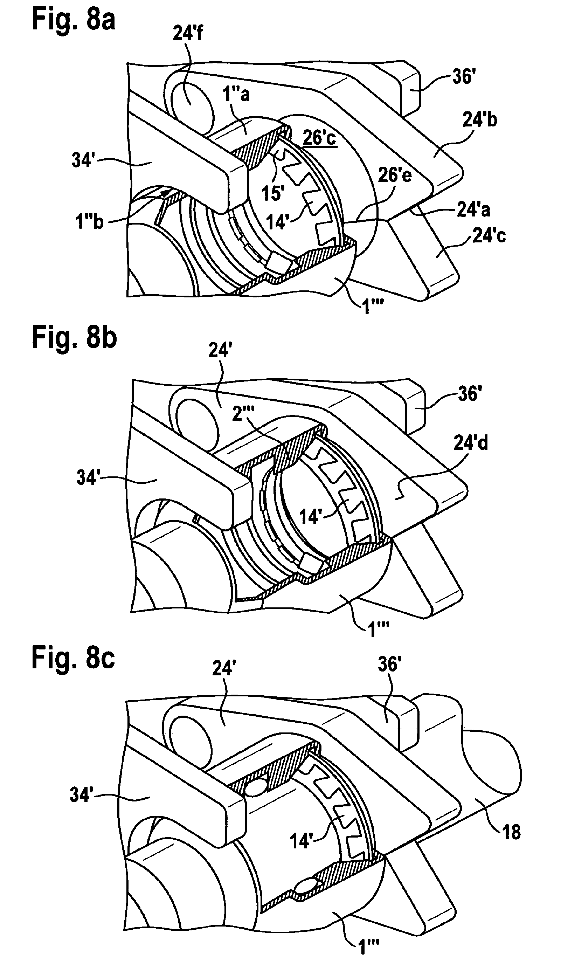

The pliers like tool 20' is provided with a first engagement means 24', 26' for engaging a socket (not shown) and/or a pipe (not shown), a second engagement means 34' for engaging the socket and a third engagement means 36' for engaging the first engagement means 24', 26' as explained in detail in the following, also making reference to figures 8a to 8c:

The first engagement means, provided at one end of the tool 20', comprises a two part ring 24' with a first split 24'a bordered by two angled extensions 24'b, 24'c, a further split (not shown) opposite the first split 24'a and a joint in form of a pivot 24'f next to the further split for facilitating the engagement with the pipe 18. The ring 24' also has a front face 24'd for engaging a socket mouth 3'" when the pipe 18 is passing through an opening 24'g of the ring 24'. Further, the ring 24' is provided with a projection 26' projecting from the front face 24'd in order to be inserted into the socket 1'" and being provided with two opposing splits 26'a corresponding to the splits 24'a of the ring 24', only one of which is shown, and a chamfer 26'c for facilitating the insertion between the pipe 18 and the socket 1'".

The second engagement means comprises a first holding means in form of a jaw 34' for engaging the socket 1 "' within an opening 34'a, and the third engagement means comprises a second holding means in form of a jaw 36' for engaging the first engaging means 24', 26'. The jaws 34' and 36' are connected with each other via an U-shaped handle 30' provided with slots 32' along its two arms. The second jaw 36' is also provided with two recesses 36'a for positioning a rubber O-ring 38' forming spring means, which also surrounds the two parts of the ring 24' next to the further split. The ring 24' is connected to the second jaw 36' by the pivot 24'f.

In figures 7 and 8a the tool 20' is shown in an open position. The distance between the two tool jaws 34', 36' can be reduced by actuating an actuation means comprising a slider bar 40' guided within the slots 32'. The slider bar 40' is provided with recesses 42', 44' in order to stay within the slots 32'.

With respect to figures 8a to 8c a method for forming the pipe fitting arrangement in line with the invention, with the help of the tool 20' as shown in figure 7 will be described:
The tool 20' is put in its open position with the slider bar 40' being retracted as shown in figure 7 such that the socket 1"' can easily be placed within the tool 20, with the jaw 34' engaging the step 1"b, see figure 8a.
In the next step the slider bar 40' is moved towards its opposite position in the slots 32' to bring the tool 20' in its close position securing the socket 1"' between its jaws 34' and 36' by moving the jaws 34', 36' towards each other. In this position the ring 24', in particular its front face 24'd, abuts against the mouth 3'" of the socket 1'", see figure 8b. Thus, when moving the tool 20' from its open position to its close position the projection 26' is pushed into the socket 1'" and thereby forcing the grip ring teeth 14', 15' radially outward to engage the projection 2'" of the socket 1'", see figure 8b. The internal teeth 15' of the grip ring 12' not having been bent prior to entering the projection 26' into the socket 1'" have to be bent like the other internal teeth 14' in a first step and, thereafter, in a second step, all internal teeth 14', 15' are further bent outwardly until engaging the projection 2".
Figure 8c illustrates the next step of operation, in which the pipe 18 is inserted through the opening 24'g of the ring 24' and projection 26' into the socket 1"' without making contact with the teeth 14', 15'. In fact, there is a clearance between the grip ring 12' and the outer surface of the pipe 18 due to the insertion of the projection 26' in order to ensure that the pipe 18 will not be damaged in order to avoid any leak path in the pipe fitting arrangement.
To remove the tool 20' upon completion of the pipe insertion the slider bar 40' is retracted in order to open the tool 20' as the handle 30' springs back in its relaxed state. During opening the tool 20' the projection 26' is retracted from the pipe fitting arrangement thereby allowing the teeth 14', 15' to relax and finally engage the pipe 18.
Finally, the tool 20' can be removed from the pipe fitting arrangement by opening the splits 24'a, 26'a.

To release a previously fitted joint, that is the press fitting arrangement the formation of which has just been described, by removing the pipe 18 the following sequence of steps can be conducted:
At the beginning the tool 20' is aligned to the pipe 18 and the socket 1'", namely such that the slider bar 40' runs substantially parallel to the pipe 18 while being in its retracted position such that the tool 20' is in its open position.
In a next step the tool 20' as such is pushed against the pipe 18 and the socket 1'" until the angled extensions 24'b, 24'c of the ring 24' are engaged against the pipe 18, which in turn opens the split 24'a.
Pushing the tool 20' further against the pipe 18 and the socket 1'" will finally result in the ring 24' surrounding the pipe 18, with the ring 24' being returned to its closed position having the split 24'a closed by means of the spring 38'. In this position the jaw 36' surrounds the pipe 18 within its opening and the jaw 34' engages the socket 1" within its opening 34'a.
The slider bar 40' now has to be moved in the direction of the pipe fitting arrangement in order to close the tool 20'. While closing the tool 20' the projection 26' penetrates between the pipe 18 and the socket 1'" and thereby forces the teeth 14', 15' out of engagement with the pipe 18.
As soon as the teeth 14', 15' are no longer engaging the pipe 18 the latter can be retracted out of the socket 1 ".

Thus, the tool 20' of the invention not only facilitates assembling as well as disassembling of a pipe fitting arrangement and is easy to handle, but also avoids any damaging of the different components of the pipe fitting arrangement, in particular the pipe 18 thereof, such that the pipe fitting arrangement, even after having been connected and released for several times, still is fluid tight. As with the invention the usage of such a tool 20' cannot be avoided due to the internal teeth 15' hindering an entering of the pipe 18 into the socket 1'" it is, in fact, assured that a fluid tight pipe fitting arrangement is assembled.

Although modifications and changes may be suggested by those skilled in the art, it is the intention of the application to embody within the patent warranted hereon all changes and modifications as reasonably and probably come within the scope of this contribution to the art. The features of the present invention which are believed to be novel are set forth in detail in the appended claims. The features disclosed in the description, the figures as well as the claims could be essential alone or in every combination for the realization of the invention in its different embodiments.

### Reference signs list

| | | | |
|---|---|---|---|
| 1, 1', 1 ", 1 "' | socket | 24, 24' | ring |
| 1a, 1'a, 1"a | step | 24a, 24'a | split |
| 1b, 1'b, 1"b, 1'''b | step | 24b, 24'b | angled extention |
| 1c, 1'c, 1"c | step | 24c, 24'c | angled extention |
| 1d, 1'd | bent | 24d, 24'd | front face |
| 1e, 1'e | shoulder | 24e | split |
| 1f, 1'f | shoulder | 24f | pivot |
| 2, 2', 2", 2"' | projection | 24g, 24'g | opening |
| 2a, 2'a | shoulder | 26, 26' | projection |
| 2b, 2'b | shoulder | 26a, 26'a | split |
| 2c, 2'c | shoulder | 26c, 26'c | chamfer |
| 3, 3', 3", 3"' | mouth | 26d | recess |
| 3a, 3"a | folded end | 26e | finger |
| 3'b | double folded end | 26f | shoulder |
| 3"c | extension | 26g | step |
| 4, 4' | groove | 30, 30' | handle |
| 5, 5' | groove | 32' | slot |
| 6, 6', 6" | opening | 34, 34' | jaw |
| 10 | sealing ring | 34a, 34a' | opening |
| 12, 12' | grip ring | 36, 36' | jaw |
| 13, 13' | external tooth | 36a | recess |
| 14, 14' | internal tooth | 36b | opening |
| 15' | internal tooth | 38' | O-ring |
| 18 | pipe | 40' | slider bar |
| 20, 20' | insertion and | 42' | recess |
| | release tool | 44' | recess |
| 100 | housing | | |
| 102 | shoulder | | |
| 103 | chamfer | | |
| 104 | projection | | |
| 105a, 105b | chamfer | | |
| 106 | shoulder | | |
| 108 | rolled-over end | | |
| 109 | opening | | |
| 110 | sealing ring | | |
| 112 | grip ring | | |
| 114 | internal teeth | | |
| 200 | release tool | | |
| 202 | opening | | |
| 204 | main body | | |
| 204a | split | | |
| 204b | recess | | |
| 204c | front face | | |
| 206 | projection | | |
| 206a | cylindrical portion | | |
| 206b | chamfered portion | | |

## Claims

1. Method for inserting a pipe into a socket for obtaining a pipe fitting arrangement in which the pipe is retainable arranged within the socket by teeth of a grip ring placed within the socket and for removing the pipe out of the socket by making usage of a tool, **characterized by** the following steps for pipe insertion:
a) inserting the tool at least partly into the socket mouth into which the pipe is to be inserted,
b) extending the internal diameter of the socket mouth at least over a part of its circumference being smaller than the external pipe diameter when inserting the tool,
c) inserting the pipe into the socket mouth through a tool opening,
d) withdrawing the tool out of the socket, and
e) disengaging the tool from the pipe.

2. Method according to claim 1, **characterized in that**
the free end of the socket at the socket mouth is, in particular elastically, forced outward and/or deformed, in particular bent, at least partly when inserting the tool into the socket.

3. Method according to claim 1 or 2, **characterized in that**
the free end of the socket, in particular comprising at least one extension extending into the socket mouth opening, preferably two opposing extensions, is folded into the socket, in particular until engaging the grip ring.

4. Method for inserting a pipe into a socket for obtaining a pipe fitting arrangement in which the pipe is retainable arranged within the socket by teeth of a grip ring placed within the socket and for removing the pipe out of the socket by making usage of a tool, **characterized by** the following steps for pipe insertion:
a) inserting the tool at least partly into the socket mouth into which the pipe is to be inserted,
b) extending the internal diameter of the grip ring at least over a part of its circumference being smaller than the external pipe diameter when inserting the tool, with at least one internal first tooth, preferably two opposing teeth, of the grip ring substantially preventing the insertion of the pipe without the use of the tool,
c) inserting the pipe into the socket mouth through a tool opening,
d) withdrawing the tool out of the socket, and
e) disengaging the tool from the pipe.

5. Method according to claim 4, **characterized in that**
the first tooth is, in particular elastically, forced outwardly and/or deformed, preferably bent, at least partly when inserting the tool into the socket, with the first tooth most preferably extending radially inwardly prior to being bent.

6. Method according to claim 5, **characterized in that**
the first tooth is folded into the socket, in particular until engaging the socket internal surface, preferably provided by an internal projection, most preferably a chamfer of said projection.

7. Method according to one of the claims 4 to 6, **characterized in that**
second internal teeth of the grip ring are, in particular elastically, forced outwardly and/or deformed, in particular bent at least partly, when inserting the tool into the socket, preferably until engaging the projection, most preferably its chamfer.

8. Method according to claim 7, **characterized in that**
the grip ring is formed from a flat, in particular metal, plate by cutting, pressing or stamping out or wire eroding the first and second teeth, with the first tooth being cut, pressed, stamped or wire eroded longer than the second teeth and/or the second teeth being bent after cutting, pressing, stamping or wire eroding such that the internal free end of the first tooth is internally projecting the internal free ends of the second teeth.

9. Method according to one of the preceding claims, **characterized in that**
the free end, the first tooth and/or the second teeth, preferably at least the second teeth, are at least partly relaxed when the tool is withdrawn out of the socket, most preferably until engaging the outer surface of the pipe in step d).

10. Method according to one of the preceding claims, **characterized in that**
a first engagement means of the tool is inserted into the socket while a second engagement means of the tool supports the socket, preferably by engaging the socket outer surface, most preferably abutting against an outer step, shoulder, projection or bent of the socket.

11. Method according to claim 10, **characterized by** the following steps for pipe withdrawal:
h) placing the first engagement means in engagement with the pipe and the second engagement means in engagement with the socket,
i) inserting at least a part of the first engagement means into the socket mouth thereby disengaging the free end and/or the first tooth and the second teeth from the pipe by forcing them outwardly until the pipe can be withdrawn,
h) withdrawing the pipe out of the socket and the tool and
i) disengaging the first engagement means from the socket.

12. Method according to claim 10 or 11, **characterized in that**
in step a), b), f) and/or g) the distance between the first engagement means and the second engagement means is reduced, in particular by closing the tool, and/or in step d) and/or i) the distance between the first engagement means and the second engagement means is enlarged, in particular by opening the tool.

13. Method according to one of the claims 10 to 12, **characterized in that**
a third engagement means of the tool is formed in connection with the second engagement means via a handle and for at least temporarily engaging the first engagement means.

14. Tool (20, 20') for assembling or disassembling a pipe fitting arrangement with a method of one of the preceding claims, comprising:
first engagement means (24, 24', 26, 26') for engaging at least partly around the pipe (18), said first engagement means (24, 24', 26, 26') having at least one part (26, 26') adapted to enter the socket (1, 1', 1 ", 1'") around the pipe (18) in order to force at least a part of the free end (3a, 3"a, 3'b, 3"c) of the socket (1,1',1",1"') and/or at least a part of the first internal tooth (15') and at least a part of the second internal teeth (14, 14') outwardly to enable an insertion and withdrawal of the pipe (18),
second engagement means (34, 34') for engaging the socket (1, 1', 1", 1'") as well as third engagement means (36, 36') for engaging the first engagement means (24, 24', 26, 26') in order to locate the socket (1, 1', 1", 1'") relative to the tool (20, 20'), in particular within the tool (20, 20'), and
a handle (30, 30') connected with the second and third engagement means (34, 34', 36, 36') and suited to be actuated, in particular via actuation means (32', 40'), to urge the second engagement means (34, 34') either to engage the socket (1, 1', 1", 1"') or disengage the socket (1, 1', 1", 1"') and the first engagement means (24, 24', 26, 26') either to be inserted into the socket (1, 1', 1 ", 1'") or to be withdrawn from the socket (1, 1', 1 ", 1 "') such that insertion of the pipe (18) into the socket (1, 1', 1", 1"') and removal of the pipe (18) from the socket (1,1', 1", 1"') without the free end (3a, 3"a, 3'b, 3"c) and/or the first tooth (15, 15') and the second teeth (14, 14') touching the pipe (18) is ensured.

15. Tool according to claim 14, **characterized in that**
the first engagement means (24', 26') is connected to and/or at least partly displaceable relative to the third engagement means (34', 36'), preferably via a first joint (24'f), in particular in form of a pivot, and/or first spring means (38').

16. Tool according to claim 14 or 15, **characterized in that**
the first engagement means (24, 24', 26, 26') comprises a main body (24, 24'), in particular in form of a ring, having at least one face or shoulder (24d, 24'd) adapted to engage the mouth (3, 3', 3", 3"') of the socket (1, 1', 1", 1'") into which the pipe (18) is to be inserted and from which the pipe (18) is to be removed, and a first opening (24g, 24'g) for the pipe (18), said first opening (24g, 24'g) preferably being defined by the face or shoulder (24d, 24'd) and/or being variable and/or adjustable, most preferably via the actuation means and/or second spring means (38'), in particular the second spring means and the first spring means being formed together.

17. Tool according to claim 16, **characterized in that**
the main body (24, 24') is deformable, preferably being formed at least partly from elastic or spring material, and/or can be opened, preferably by comprising at least one split (24a, 24'a, 24e), most preferably two opposing splits, and/or by providing a plurality of fingers or claws (26e) between recesses (26d).

18. Tool according to claim 16 or 17, **characterized in that**
the main body (24, 24') comprises at least one, in particular angled, extension (24b, 24'b, 24c, 24'c) next to one split (24a, 24'a), preferably two such extensions one on each side of the split, to facilitate entering of the pipe (18) into the first engagement means (24, 24', 26, 26') through the split (24a, 24'a).

19. Tool according to one of the claims 16 to 17, **characterized in that**
the main body (24, 24') is formed by two halves being connected to each other, pref erably at a second joint (24f), in particular in form of a pivot, arranged next to a split (24e), most preferably the split (24e) opposite the extension(s) (24b, 24'b, 24c, 24'c), in particular the second joint being identical to the first joint.

20. Tool according to one of the claims 14 to 19, **characterized in that**
the part (26, 26') of the first engagement means (24, 24' 26, 26') to be inserted into the socket (1, 1', 1", 1'") has a tube like form, preferably having at least one split (26a, 26'a, 26b, 26'b), most preferably two opposing splits, and/or is provided with a chamfer (26c, 26'c) or tapering off towards its free end for facilitating its insertion into the socket (1, 1', 1", 1'").

21. Tool according to one of the claims 14 to 20, **characterized in that**
the outer surface of the first engagement means (24, 26), in particular of the part (26), is provided with at least one abutment shoulder (26f), projection or bent for engaging the socket mouth (3, 3', 3", 3"') and/or the first tooth (15'), preferably defining a deformation of at least a part of the free end, in particular in the region of an extension (3"c), and/or the first tooth (15').

22. Tool according to claim 21, **characterized in that**
the shoulder (26f), projection or bent is provided on the chamfer (26), preferably next to a step (26g).

23. Tool according to one of the claims 16 to 22, **characterized in that**
the part (26, 26') of the first engagement means (24, 24', 26, 26') is formed as a projection of the main body (24, 24') surrounding the first opening (24g, 24'g) at least partly.

24. Tool according to one of the claims 14 to 23, **characterized in that**
the second engagement means (34, 34') comprises first holding means (34, 34') for engagement with the socket (1, 1', 1 ", 1 "') and the third engagement means (36, 36') comprises second holding means (36, 36') for engagement with the first engagement means (24, 24', 26, 26'), the socket (1, 1', 1 ", 1''') being preferably locatable between the two holding means (34, 34', 36, 36') and/or the holding means (34, 34', 36, 36') being preferably moveable relative to each other, most preferably via the actuation means (32', 40').

25. Tool according to claim 24, **characterized in that**
the first holding means (34, 34') comprises a substantially U-shaped first body, pref erably in form of a first jaw, and/or the second holding means (36, 36') comprises a substantially U-shaped second body, preferably in form of a second jaw.

26. Tool according to claim 24 or 25, **characterized in that**
the first holding means (34, 34') has a second opening (34a, 34'a) for the socket (1, 1', 1", 1''') and/or
the second holding means (36, 36') has a third opening (36b) for the pipe (18),
the second and/or third opening being preferably variable and/or adjustable, in particular via the actuation means and/or third spring means (38') for facilitating the insertion of the pipe (18) and/or socket (1, 1', 1", 1"'), the third spring means most preferably being formed together with the first and/or second spring means.

27. Tool according to claim 26, **characterized in that**
the second opening is provided between two halves of the first holding means being pivotably connected to each other, preferably via a third pivot, most preferably being identical to the first joint, and/or the third opening is provided between two halves of the second holding means being pivotably connected to each other, preferably via a fourth joint, most preferably being identical with the third joint.

28. Tool according to one of the claims 15 to 27, **characterized in that**
the first, second and/or third spring means (38') comprise(s) at least one elastic ring, in particular a rubber O-ring, arranged substantially perpendicular to a longitudinal axis of the first, second and/or third opening (24g, 24'g, 34a, 34'a, 36b), preferably the first spring means being arranged within at least one recess (36'a) of the main body (24') and/ the second holding means (36').

29. Tool according to one of the claims 24 to 28, **characterized in that**
the first holding means (34, 34') is adapted to engage the socket outer surface between a first internal projection or shoulder or bent (1d, 1'd) of the socket (1, 1', 1", 1"') for limiting insertion of the pipe (18) into the socket (1, 1', 1", 1'") and a second internal projection or shoulder (1e, 1'e) or bent of the socket (1, 1', 1", 1'") for limiting movement of a sealing ring (10, 10') in the pipe insertion direction or between said second internal projection or shoulder (1e, 1'e) or bent and a third internal projection or shoulder (If, 1'f) or bent of the socket (1, 1', 1", 1'") for limiting movement of the grip ring (12, 12') in the pipe insertion direction and/or limiting movement of the sealing ring (10, 10') in the pipe removal direction.

30. Tool according to claim 29, **characterized in that**
the third internal shoulder (If, 1'f) is provided by the internal projection (2, 2', 2", 2"') limiting movement of the first internal tooth (15, 15') and the second internal teeth (14, 14') when inserting the tool part (26, 26') into the socket (1, 1', 1", 1"').

31. Tool according to claim 30, **characterized in that**
the internal projection (2, 2', 2", 2"') has a shoulder (2a, 2'a, 2"a) facing the grip ring (12, 12'), preferably provided with a chamfer, said chamfer most preferably running substantially parallel to the chamfer (26c, 26'c) of the tool part (26, 26') when inserted.

32. Tool according to one of the claims 24 to 31, **characterized in that**
the first holding means (34, 34') is adapted to engage the socket outer surface next to at least one external shoulder or projection and/or within a recess or groove.

33. Tool according to one of the claims 14 to 32, **characterized in that**
the handle and the actuation means are formed as a plier's and/or ratchet's handle and actuation means.

34. Tool according to one of the claims 24 to 33, **characterized in that**
the handle (30, 30'), preferably in U-shape, is connected to the first and the second holding means (34, 34', 36, 36'), most preferably with one holding means provided at each free end.

35. Tool according to claim 34, **characterized in that**
the free ends of the handle (30, 30') are moveable towards each other and away from each other via the actuating means, preferably by moving a slider bar (40'), in particular within a slot (32') provided in each arm of the U-shaped handle (30'), to the free ends and away therefrom.

36. Tool according to claim 35, **characterized in that**
the slider bar (40') is positioned substantially parallel to the longitudinal axis of the first, second and/or third opening (24'g, 34'a) and/or fixable in at least two positions.
